# EUROPEAN PATENT APPLICATION

(11) **EP 4 607 232 A1**
(43) Date of publication of application: **27.08.2025**
(21) Application number: 24158933.2
(22) Date of filing: 21.02.2024
(51) Int. Cl.: G01S 7/02, G01S 7/03, G01S 7/35, G01S 13/00, G01S 13/931, H01Q 1/32

(54) **SYNCHRONIZING OF DISTRIBUTED RADAR UNITS**

(71) Applicant: NXP B.V., 5656 AG Eindhoven (NL)
(72) Inventor: ALHASSON, Saif, 81829 Munich (DE); BEKOOIJ, Marco Jan Gerrit, 5656AE Eindhoven (NL); KOPPELAAR, Arie Geert Cornelis, 5656AE Eindhoven (NL)
(74) Representative: Hardingham, Christopher Mark

(57) **Abstract**

A radar system (100) for a vehicle. The radar system comprises a first radar unit comprising: a first transmitter head (105-1) and a first receiver head (105-1); a first coupling structure (110-1) coupled to the first transmitter head or the first receiver head; and a first waveguide launcher (115-1) coupled to the first coupling structure. The radar system further comprises a second radar unit comprising: a second transmitter head (105-2) and a second receiver head (105-2); a second coupling structure (110-2) coupled to the second receiver head; and a second waveguide launcher (115-2) coupled to the second coupling structure. The radar system further comprises a waveguide (125) coupled between the first and second waveguide launchers. The radar system is configured to synchronize the radar units.

## Description

### FIELD

The present disclosure relates to a radar system and method for synchronizing distributed radar units. In particular, the present disclosure relates to a fully integrated, easy mountable waveguide for wavelengths in the millimetre (mm) spectrum, and a radar system for synchronising distributed radar units.

### BACKGROUND

Radar sensors can be found in a variety of sensing applications in which distances and velocities of objects are to be measured and/or analysed. One of these applications is the automotive sector, for example as used in parking sensors. Autonomous cars, for example, use numerous sensors such as radar sensors to detect and locate various objects in their surroundings. Information about position and velocity of objects in the surrounding of an autonomous car is used to navigate safely, based on information received via these sensors.

Modern radar systems make use of highly integrated radio frequency (RF) circuits, which may incorporate all core functions of a radar transceiver in one single package (single chip transceiver). These usually include a local RF oscillator (LO), power amplifiers (PA), and low noise amplifiers (LNA) mixers.

Frequency modulated continuous wave (FMCW) radar systems use radar signals whose frequency is modulated by ramping the signal frequency up and down. Such radar signals are often referred to as "chirp signals" or simply as chirps. A radar sensor usually radiates sequence of chirps using one or more antennas, and the radiated signal is backscattered by one or more objects (referred to as radar targets) located in the "field of view" of a radar sensor. The backscattered signals are received and processed by the radar sensor. The detection of the radar targets is usually accomplished using digital signal processing.

In an automotive radar system, one or more radar sensors may be used to detect obstacles around the vehicle and the speeds of the detected objects relative to the vehicle. A processing unit in the radar system may determine the appropriate action needed, e.g., to avoid a collision or to reduce collateral damage, based on signals generated by the radar sensors or may alert the vehicle driver about potential danger or assist the driver with parking the vehicle.

Monostatic radars are composed of a single set of transmitter, receiver, and antenna. Bistatic radars, on the other hand, is a radar system comprising a transmitter head and a receiver head at the same frequency band that can be separated due to the transmitter and receiver heads not using the same frequency.

In a distributed coherent bistatic radar both radar heads use their own local crystal XO to generate a 76 GHz RF signal. An XO is an active device containing a crystal resonator, which generates a sinusodial signal. The local XOs are not exactly the same and will generate a slightly different frequency. This frequency is also not constant but slowly varying which is known as phase-noise.

Synchronizing the radar heads in the system can be challenging. One way of determining synchronization is by determining the frequency offset and phase-noise, which can be estimated using the beat signals of both radar heads that is a result of reflection against physical objects in the radar scene. This can cause problems. For example, frequency offset and phase-noise may be incorrectly estimated by the radar which can results in that targets are not detected.

### SUMMARY

Features of the invention are set out in the appended claims.

According to a first aspect, there is provided a radar system for a vehicle. The radar system comprises the following. A first radar unit comprising: a first transmitter head and a first receiver head; a first coupling structure coupled to the first transmitter head or the first receiver head; and a first waveguide launcher coupled to the first coupling structure. The radar system further comprising a second radar unit comprising: a second transmitter head and a second receiver head; a second coupling structure coupled to the second receiver head; and a second waveguide launcher coupled to the second coupling structure. The radar system further comprising a waveguide coupled between the first and second waveguide launchers. The first and second coupling structures are configured to redirect a portion of a signal from the respective transmitter head or receiver head that the coupling structure is coupled to in order to excite the first and second waveguide launchers respectively in order to transmit an excited signal to the other of the radar units via the waveguide. Upon receipt of the excited signal received via the waveguide, a beat signal is generated from which a frequency offset and a phase-noise calculation are made. The first and second radar units are configured to be synchronized based on the frequency offset and the phase-noise calculation.

In some embodiments, the first coupling structure may be coupled to the transmitter head of the first radar unit; and the first and second waveguide launchers may comprise a single feed from the respective coupling structures.

In some embodiments, the first coupling structure may be coupled to the receiver head of the second radar unit; and the first and second waveguide launchers may comprise a single feed from the respective coupling structures.

In some embodiments, the first radar unit may further comprise a third coupling structure coupled to the other of the first receiver head or the first transmitter head of the first radar unit. The first waveguide launcher may be coupled to the first and third coupling structure. The second radar unit may further comprise a fourth coupling structure coupled to the transmitter head of the second radar unit. The second waveguide launcher may be coupled to the second and fourth coupling structures.

In some embodiments, the first waveguide launcher may be coupled to the first and third coupling structures via a first power combiner; and the second waveguide launcher may be coupled to the second and fourth coupling structures via a second power combiner. The power combiners can be used to create a single feed to the first waveguide launcher form the two radar heads of the radar units.

In some embodiments, the radar system may further comprise: a first data transceiver coupled to the first waveguide launcher; and a second data transceiver coupled to the second waveguide launcher. The first and third coupling structures create a first feed to the waveguide launcher whilst the first and second data transceivers create a second feed to the waveguide launcher thereby resulting in a dual feed. The waveguide may have a square cross-section.

In some embodiments, the first waveguide launcher may be coupled to the first and third coupling structures respectively; and the second waveguide launcher may be coupled to the second and fourth coupling structures respectively. This also creates a dual feed to the waveguide launcher. The waveguide may have a square cross-section.

In some embodiments, the first and second coupling structures may each comprise a directional coupler.

In some embodiments, the first and second coupling structures may each comprise a power divider.

In some embodiments, the dielectric waveguide may be a Molded Interconnect Device (MID).

In some embodiments, the first and second waveguide launchers may comprise two orthogonal ports. This may create a dual polarization of the wave transmitted through the waveguide.

In some embodiments, the first and second waveguide launchers may comprise a single port, and the waveguide may have a circular cross-section. This may create a circular polarization of the wave transmitted through the waveguide.

In some embodiments, the waveguide may be configured to connect to one or more further radar units. The radar units each comprising a transmitter head and a receiver head.

In some embodiments, the redirected portion of energy/power of the respective radar head may comprise less than 10% of the total energy/power of the radar head.

There is also provided herewith a bumper comprising the radar system, the bumper comprising the following. A first radar unit comprising: a first transmitter head and a first receiver head; a first coupling structure coupled to the first transmitter head or the first receiver head; and a first waveguide launcher coupled to the first coupling structure. The radar system further comprising a second radar unit comprising: a second transmitter head and a second receiver head; a second coupling structure coupled to the second receiver head; and a second waveguide launcher coupled to the second coupling structure. The radar system further comprising a waveguide coupled between the first and second waveguide launchers. The first and second coupling structures are configured to redirect a portion of a signal from the respective transmitter head or receiver head that the coupling structure is coupled to in order to excite the first and second waveguide launchers respectively in order to transmit an excited signal to the other of the radar units via the waveguide. Upon receipt of the excited signal received via the waveguide, a beat signal is generated from which a frequency offset and a phase-noise calculation are made. The first and second radar units are configured to be synchronized based on the frequency offset and the phase-noise calculation.

Optionally, wherein the bumper is fabricated on top of or integral to the bumper.

There is also provided herewith a vehicle comprising the radar system comprising the bumper or the radar system, the vehicle comprising the following. A first radar unit comprising: a first transmitter head and a first receiver head; a first coupling structure coupled to the first transmitter head or the first receiver head; and a first waveguide launcher coupled to the first coupling structure. The radar system further comprising a second radar unit comprising: a second transmitter head and a second receiver head; a second coupling structure coupled to the second receiver head; and a second waveguide launcher coupled to the second coupling structure. The radar system further comprising a waveguide coupled between the first and second waveguide launchers. The first and second coupling structures are configured to redirect a portion of a signal from the respective transmitter head or receiver head that the coupling structure is coupled to in order to excite the first and second waveguide launchers respectively in order to transmit an excited signal to the other of the radar units via the waveguide. Upon receipt of the excited signal received via the waveguide, a beat signal is generated from which a frequency offset and a phase-noise calculation are made. The first and second radar units are configured to be synchronized based on the frequency offset and the phase-noise calculation.

According to a second aspect, there may be provided a method of synchronising a radar system for a vehicle, the method comprising: feeding a first waveguide launcher with a first signal from a first radar unit comprising a transceiver head or a receiver head, wherein the first signal from the first radar unit is coupled to the first waveguide launcher via a first coupling structure; the first waveguide launcher launching a polarised wave in a waveguide; exciting a second waveguide launcher coupled to the waveguide; at the second waveguide launcher, transforming the first signal into a second signal coupled to a receiving channel of a second radar unit by a second coupling structure at the second radar unit; determining a frequency offset and a phase-noise between the first and second radar units based on a resulting beat signal generated by the first and second signals; and synchronising local oscillators of the first and second radar units based on the determined frequency offset and phase-noise.

### BRIEF DESCRIPTION OF DRAWINGS

A more complete understanding of the subject matter may be derived by referring to the detailed description and claims when considered in conjunction with the following figures, wherein like reference numbers refer to similar elements throughout the figures.
Figure 1 illustrates a diagram of a radar system according to a first embodiment of the present disclosure;
Figure 2 illustrates a diagram of a radar system according to a second embodiment of the present disclosure comprising a dual Tx-Rx-Rx channel;
Figure 3 illustrates a diagram of a radar system according to a third embodiment of the present disclosure comprising a dual Tx-Rx channel;
Figure 4 illustrates a diagram of a radar system according to a fourth embodiment of the present disclosure comprising a Tx-Rx and data channel using dual polarization;
Figure 5 illustrates a diagram of a radar system according to a fifth embodiment of the present disclosure comprising a dual Tx-Rx channel using dual polarisation;
Figure 6 illustrates a diagram of a radar system according to a sixth embodiment of the present disclosure;
Figure 7 illustrates a zoomed in view of a coupler used in some of the embodiments of the present disclosure;
Figure 8 illustrates a schematic diagram of a vehicle bumper comprising radar units;
Figures 9A and 9B illustrate a dielectric waveguide as fabricated on top of (Figure 9A) and integral to (Figure 9B) a vehicle bumper;
Figure 10 illustrates a vehicle comprising a radar system according to an embodiment of the present disclosure.

### DETAILED DESCRIPTION

The following detailed description is merely illustrative in nature and is not intended to limit the embodiments of the subject matter or the application and uses of such embodiments. As used herein, the words "exemplary" and "example" mean "serving as an example, instance, or illustration." Any implementation described herein as exemplary or an example is not necessarily to be construed as preferred or advantageous over other implementations. Furthermore, there is no intention to be bound by any expressed or implied theory presented in the preceding technical field, background, or the following detailed description.

The present disclosure provides a device and method for an alternative way to calculate frequency offset and phase-noise between distributed radar units to synchronize the radar units within a system. The solution described herein does not rely on radar signals being reflected off physical objects, instead using portions of the radar signal being transmitted by the radar heads directly between the radar heads in the system to generate beat signals. Frequency offset and phase-noise can be estimated using the beat signals of both radar heads that is a result of reflection against physical objects in the radar scene. An alternative method is provided by the present disclosure; to use the directly received signal, i.e. without reflection against an object, instead making the calculation based on signals received from the Tx or Rx of the other radar head. Typical radar antenna direct most of their energy in the forward direction, and therefore have a low gain at 90 degree sidewards. The spill-over is therefore usually a weak signal that is unsuitable for synchronization.

In the present disclosure, the signal is coupled from one radar unit to the other as described in detail below. This signal can result in a strong beat signal in the radar heads of the system that can be used to estimate the frequency offset and phase-noise and compensate it as well. Only a very small portion of the energy of the radar heads is coupled to the waveguide, so the sacrifice to the overall operation of the radar units is small.

A reliable and strong signal can be created from this small portion of re-directed energy which can be used to estimate the frequency offset of the radars by coupling the signal from one radar unit to the other. The use of this coupled signal helps to create a reliable means for synchronization. An advantage of using the coupled signal in synchronization is that it creates a target that is not moving and has thus no velocity, which helps to simplify the calculations.

No dedicated Tx-Rx channel is required to perform synchronization of the radar heads in the system of the present disclosure.

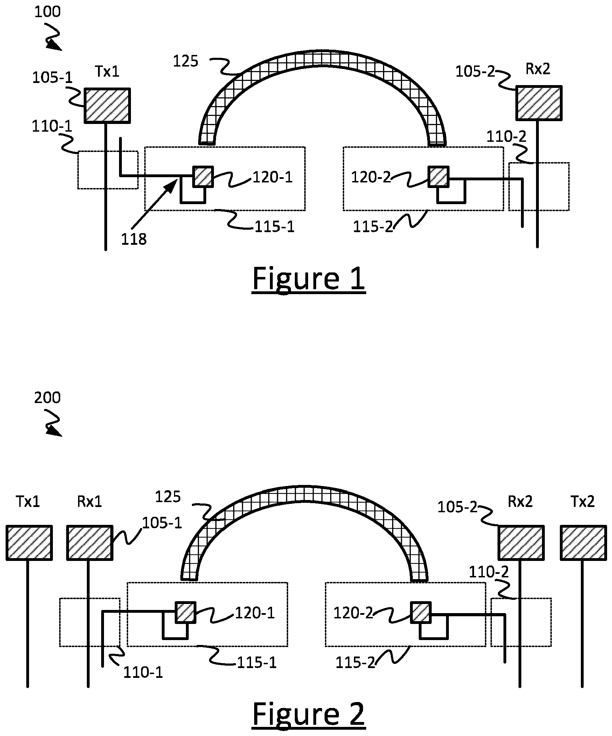

Figure 1 illustrates a diagram of a radar system 100 according to a first embodiment of the present disclosure. The radar system 100 comprises the following elements as described below.

A first radar unit comprises a transmitter head (Tx1) 105-1 coupled via a first coupling structure 110-1 to a first polarized waveguide launcher 115-1. In the illustrated example of Figure 1, the waveguide launcher 115-1 comprises a first single feed dual polarized waveguide launcher 115-1 comprising a first square launcher 120-1 comprising orthogonal dual ports. In other examples (not illustrated), the waveguide launcher 115-1 comprises a circular polarized waveguide launcher having a single port for receiving a single feed from Tx1. Not illustrated in Figure 1 is a receiver head (Rx1) of the first radar unit because it is not coupled to the radar system described below for synchronization in this first embodiment.

A second radar unit comprises a receiver head (Rx2) 105-2 coupled via a second coupling structure 110-2 to a second polarized waveguide launcher 115-2. In the illustrated example of Figure 1, the waveguide launcher 115-2 comprises a second single feed dual polarized waveguide launcher 115-2 comprising a second square launcher 120-2 comprising orthogonal dual ports. In other examples, the waveguide launcher 115-2 comprises a circular polarized waveguide launcher having a single port. Not illustrated in Figure 1 is a transmitter head (Tx2) of the second radar unit because it is not coupled to the radar system described below for synchronization.

The first and second radar units are coupled to one another via a waveguide 125 suitable for wavelengths in the millimetre range as used in the present disclosure. The waveguide 125 could be a dielectric waveguide 125. In other examples, the waveguide can be a rod (e.g. a plastic rod) or fibre. The cross-section of the waveguide 125 can be square or circular, for example, depending on the polarization of the wave transmitted therethrough. The waveguide launchers 115 launch dual polarized electromagnetic signals into the waveguide 125 in the case of the waveguide 125 having a square cross-section, and circular polarised electromagnetic signals in the case of a circular-cross-section.

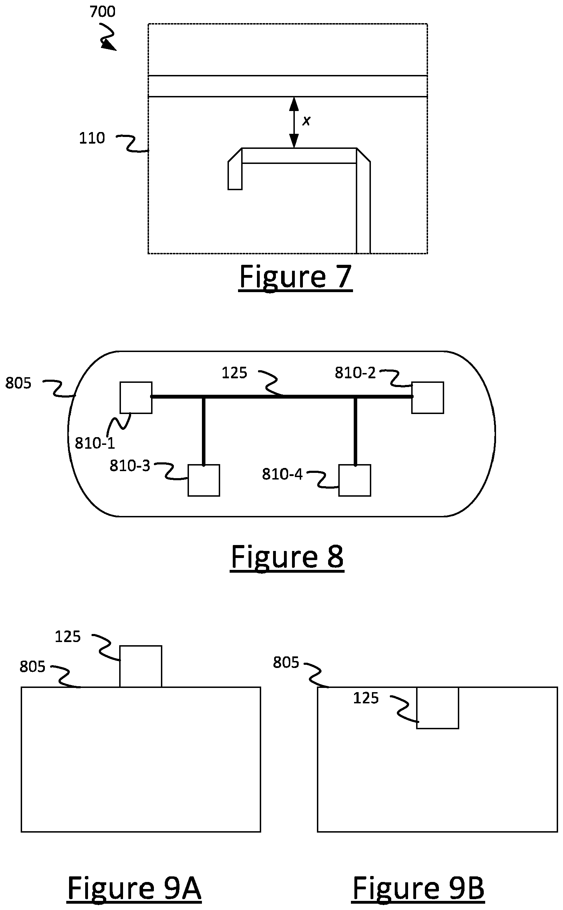

Transmitter (Tx) and receiver (Rx) antennas (also called Tx, Rx heads) are fed by feeding lines from an RF chip (not shown). The coupling structures 110 allow some energy or power to be re-directed from the Tx and Rx to the waveguide launchers 115-1, 115-2. The coupling structures 110-1, 110-2 of Figure 1 comprise directional couplers (described further below in relation to Figure 7). Other coupling structures comprise power dividers, which achieve the same effect of re-directing some of the power of the antenna to the waveguide launchers 115-1, 115-2. The energy between the first and second radar units as re-directed by the coupling structures 115-1, 115-2 is used to synchronize both the first and second radar units as will be described in more detail below. Although they are called directional couplers, the signal can in fact flow in two directions through the couplers. The purpose of using the couplers is attenuation such that only a very small amount of power is coupled from the Tx head into the waveguide 125, and at the receiving side that the signal received by the Rx head to the integrated transceiver circuit (IC) is not disturbed and is not attenuated.

In both first and second waveguide launchers 115-1, 115-2 illustrated in Figure 1, the single feed is split by a power divider 118 to feed the orthogonal launcher ports and create a dual polarisation. The waveguide launchers 115-1, 115-2 each comprise one dual feed dual polarized launcher having orthogonally aligned dual ports. The orthogonal ports ensure orthogonal dual polarization can be achieved in the waveguide 125. In alternative configurations, comprising a single feed, there is no need to split the signal and no power divider is required. The power divider 118 is therefore optional, depending on the type of waveguide launcher 115 used in the set-up.

Although not illustrated in Figure 1, an alternative arrangement for the waveguide launchers 115 comprises two orthogonally aligned rectangular waveguide launchers, each rectangular waveguide launcher having a single port. A further alternative arrangement can be provided by a single port, circular polarizing waveguide launcher (not illustrated in Figure 1).

A dielectric waveguide (DWG) may be used as a medium to communicate chip-to-chip in a system. In electromagnetic and communications engineering, the term waveguide may refer to any linear structure that conveys electromagnetic waves between its endpoints. The waveguide 125 of the present disclosure is designed for wavelengths in the millimetre (mm) spectrum.

The dielectric waveguide can employ a solid dielectric core or could be formed of a coreless fibre (e.g. a small plastic tube). A dielectric is an electrical insulator that can be polarized by an applied electric field. When a dielectric is placed in an electric field, electric charges shift from their average equilibrium positions causing dielectric polarization. Because of dielectric polarization, positive charges are displaced toward the field and negative charges shift in the opposite direction. This creates an internal electric field which reduces the overall field within the dielectric itself. The term dielectric is used to indicate the energy storing capacity of the material by means of polarization.

Typical waveguides used in radar systems have a rectangular cross-section. In the present disclosure, however, a waveguide 125 having a square cross-section or a circular cross-section is used. A square cross-section enables the waveguide 125 to be able to transmit two orthogonal signals in the same direction, which can be useful in some embodiments. This is not possible in the traditional rectangular configuration.

In operation, a signal is created at Tx1 105-1 of the first radar unit, and at Rx 105-2 of the second radar unit. A portion of the power of this signal is diverted by the coupling structures 110-1, 110-2 and redirected as a single feed to the waveguide launchers 115-1, 115-2. The redirected portion of power of the respective radar head preferably comprises less than 10% of the total power of the radar head. More preferably wherein the redirected portion of power is less that 5%, even more preferably less than 1%. The single feed can be duplicated by a power divider 118 and fed as input to the orthogonal dual launcher ports of the square waveguide launcher 120-1, or if a single port waveguide launcher 115 is used (for example to create a circular polarized wave) the signal can be fed straight to the single port.

The dual ports of the waveguide launchers 115 excite a fundamental mode in two orthogonal polarizations. Two signals can be transmitted through the square waveguide 125 in the same propagation direction using the same waveguide 125, dual polarization introduces an additional form of orthogonalization of the signals such that more data can be transferred via the waveguide 125, or for example removes a requirement of other forms of orthogonalization. The square shape of the waveguide 125 is different from the standard rectangular waveguide form and allows the excitation of two orthogonal signals.

These excited signals are transmitted through the waveguide 125 to the other radar unit in the system that the waveguide 125 is coupled to. In each radar head (Tx1, Rx2 in Figure 1, though this may be different in other embodiments described below) the received signal from the other radar head is downmixed with the locally generated RF signal. In one example, a 76 GHz RF signal can be used, though any suitable frequency can be used. After downmixing a slightly different and time-variant beat frequency is obtained as a result of the use of a different XO for transmission than reception and the phase-noise of each XO. To get a good detection and direction of arrival, DoA, estimation performance, the time varying frequency difference should be estimated and compensated.

The beat signal being generated in both radar heads 105-1, 105-2 of the radar system 100 can be used to estimate the frequency offset and phase-noise. A way to estimate the frequency offset and phase-noise from the beat signal of both radar heads is described in, e.g. *"*Gottinger M, Hoffmann M, Christmann M, Schütz M, Kirsch F, Gulden P, Vossiek M. Coherent automotive radar networks: The next generation of radar-based imaging and mapping. IEEE Journal of Microwaves. 2021 Jan 11;1(1): 149-63*.".* The estimation procedure is described in this paper with equation 5 on page 153. This approach also works if multiple targets are present in the scene, and thus also when an additional coupled target is introduced.

The result of implementing the radar system 100 is a distributed radar network with high angular resolution where synchronization of the radar units in the system 100 is achieved.

Figure 2 illustrates a diagram of a radar system 200 according to a second embodiment of the present disclosure comprising a dual Tx-Rx-Rx channel.

The second embodiment describes many of the same features as the first radar system 100 described above. The coupling structures 115-1, 115-2 comprising directional couplers, the single feed dual polarized waveguide launchers 115-2, 115-1, and the waveguide 125 are described above in relation to Figure 1 and will not be described again in detail. In the illustrated example in Figure 2, the coupling structures 115 are directional couplers. The alternatives to the illustrated waveguide launchers 115 (e.g. comprising a single port) and the waveguide 125 variations described in relation to Figure 1 are also compatible with this embodiment.

The radar system 200 illustrates an alternative way to establish a two-way connection between first and second radar units. In this embodiment, wireless crosstalk between Tx1 and Rx1 of the first radar unit is channelled via the coupling structure 120-1, e.g. via a directional coupler as illustrated in Figure 2, coupled to Rx2. The waveguide launcher 115-1 is fed by this crosstalk signal, which is then sent to Rx2 via the waveguide 125 in the same manner as described above in relation to Figure 1. A crosstalk signal between Tx2 and Rx2 of the second radar unit is transmitted to Rx1 of the first radar unit in the same way.

The coupling structures 105-1, 105-2 comprising bi-directional couplers and the waveguide launchers 115-1, 115-2 is connected to the receiver heads Rx1, Rx2 only, instead of the transmitter heads Tx1, Tx2 in this embodiment. An advantage of this is that specific coupling structures to the Tx heads are not required, which increases the freedom of placement of the waveguide launchers 115 and feedlines in the design layout of the system.

The operation of the radar system 200 and method of synchronisation of the two radar units is achieved in the same manner as described above in relation to Figure 1.

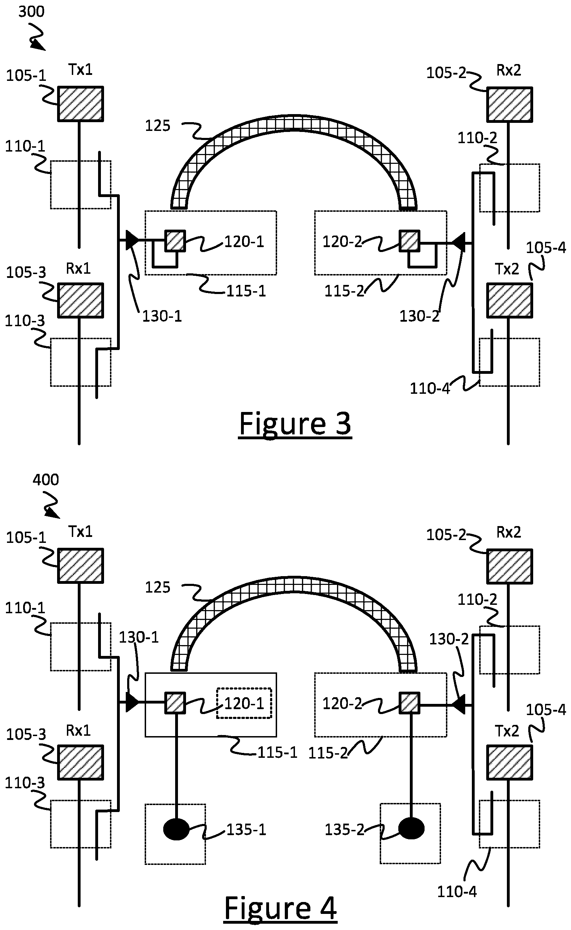

Figure 3 illustrates a diagram of a radar system 300 according to a third embodiment of the present disclosure comprising a dual Tx-Rx channel.

The coupling structures 115-1, 115-2 comprising directional couplers, the single feed dual polarized waveguide launchers 115-2, 115-1, and the waveguide 125 are described above in relation to Figure 1 and will not be described again in detail. The alternatives to the illustrated waveguide launchers 115 (e.g. comprising a single port) and the waveguide 125 variations described in relation to Figure 1 are also compatible with this embodiment.

The radar system 300 of Figure 3 comprises additional radar heads: Rx1 110-3 which is a receiver head of the first radar unit and Tx2 105-4 which is a transmitter head of the second radar unit. Rx1 105-3 is coupled to coupling structure 110-3 comprising a directional coupler and Tx2 105-4 is coupled to coupling structure 110-4 comprising a directional coupler.

The signal from the first radar unit comprising Tx1 105-1 and Rx1 105-3 is redirected by coupling structures 110-1, 110-3 respectively and combined by a first power combiner 130-1. The first power combiner 130-1 provides the combined signal from Tx1 105-1 and Rx1 105-3 as a single feed to the waveguide launcher 115-1. This combined feed can be split between two ports in the case of a dual feed waveguide launcher 115 or fed directly into a single port of a single feed waveguide launcher 115.

The waveguide launchers 115-1, 115-2 launch a dual polarised orthogonal electromagnetic signal into the waveguide 125 as described above in relation to Figure 1, or a circular polarized electromagnetic signal as also described above.

A synchronization signal generated by the radar system 300 can be sent in two directions between the radar units much like that of the first and second embodiments described above. Figure 3 shows that power from Tx1 is combined with power from Rx1 (a similar connection is made Tx2 and Rx2) by power combiner 130-1 (130-2) to feed the waveguide launcher 115-1 (115-2). This combining of the signal generates a Tx1-Rx2 signal path in one direction and Tx2-Rx1 in the opposite direction. Due to the coupler's attenuation (transmission loss) at both feedlines of the power combiner via a cable or another transmission line that connects the antenna with Tx or Rx, connecting Tx1 to Rx1 will have less crosstalk than that caused through the air (for example as illustrated and described above in relation to Figure 2). An additional path is created between the Rx and Tx via the couplers, the signal via this path can be made smaller than the parasitic coupling that is always present.

By using Tx-Rx power combiner 130, the synchronization signal can be sent in both directions between the radar units in same waveguide 125 as in the earlier embodiments.

Figure 4 illustrates a diagram of a radar system 400 according to a fourth embodiment of the present disclosure comprising a Tx-Rx and data channel using dual polarization.

The radar system 400 comprises the same elements as that of Figure 3, plus first and second data transceivers 135-1, 135-2 which are coupled to the first and second waveguide launchers 115-1, 115-2 respectively. In all previous radar systems 100 to 300 mentioned above, a single signal feedline from the radar unit Tx or Rx head is distributed to both ports of the dual port waveguide launchers 120-1, 120-2 to create a single feed dual polarization inside the waveguide.

As illustrated in Figure 4, the first waveguide launcher 120-1 is dual fed: one from the Tx1-Rx1 combined signal and one from the data transceiver 135-1. The second waveguide launcher 120-2 is similarly dual fed by the Rx2-Tx2 combined signal and the data transceiver 135-2.

By dual feeding the waveguide launchers, a data transmission signal and a Tx-Rx chirp signal can be transmitted via the waveguide 125. As in previous embodiments, the signal is encoded in both polarization directions equally and the same signal is therefore received at both ports of the receiving waveguide launcher 115.

The advantage of dual feeding the waveguide launchers 115-1, 115-2 is that different information can be sent to the other radar unit via the orthogonal dual polarizations transmitted by the waveguide 125.

A dielectric waveguide 125 having a square cross-section is used in this embodiment. As described above, a square cross-section enables the waveguide to be able to transmit two orthogonal signals in the same direction. This is not possible in the traditional rectangular configuration. The signals that are transmitted via the square waveguide 125 comprise chirp and data signals in the same propagation direction.

In the fourth embodiment and as described above, the additional information is provided by the first and second data transceivers 135-1, 135-2 which are coupled to the first and second waveguide launchers 115-1, 115-2 respectively. The additional information provided by the data transceivers 130 comprises communication data for distributed radar functionality in addition to the synchronization chirp from the Tx-Rx signal.

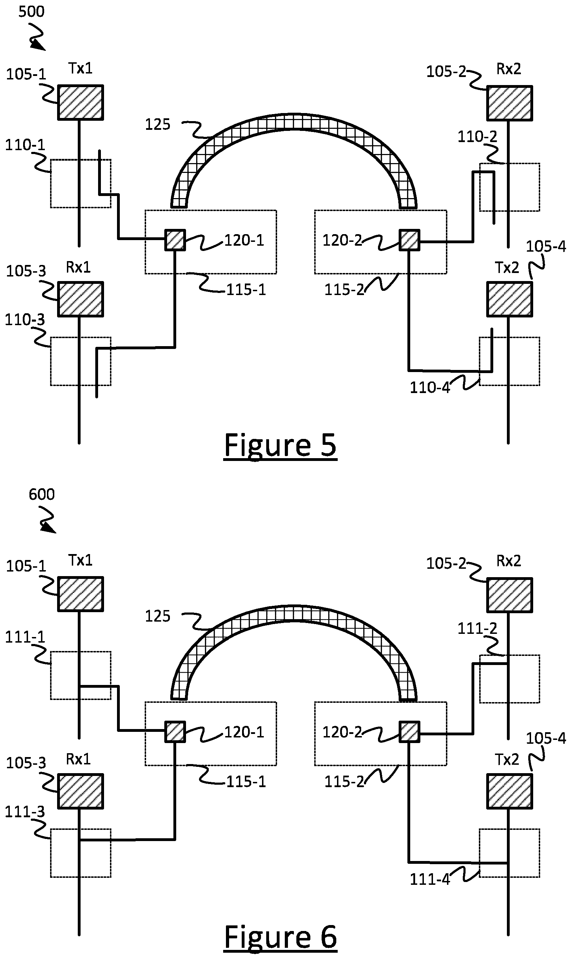

Figure 5 illustrates a diagram of a radar system 500 according to a fifth embodiment of the present disclosure comprising a dual Tx-Rx channel using dual polarisation. Features which have been described above are not described again in detail here. The waveguide launchers 115-1, 115-2 comprise dual ports, creating dual polarized orthogonal waves. Accordingly, a waveguide 125 having a square cross-section is used in this embodiment.

The radar system 500 comprises the same elements as those of Figure 3. The difference between radar system 300 and radar system 500 relates to how the radar heads (Tx1, Rx1, Tx2, Rx2) feed into the waveguide launchers 115 and ultimately the waveguide 125.

The radar system 500 comprises another possible connection method of the radar units to the waveguide launcher ports 120-1, 120-2. This is achieved by removing the power combiner 130-1 of radar system 300 that connects the Tx and Rx of one radar unit as illustrated in Figures 3 and 4, and connecting the coupled energy of the Tx to one of the ports of the waveguide launcher 120-1, 120-2 to create a first feeding line (e.g. polarization line) of the waveguide launcher 115 and connecting the Rx to the other feeding line (e.g. polarization line) of the waveguide launcher 115.

This way of connecting the Tx and Rx to the different ports provides maximum isolation of both channels due to isolation of the directional couplers 110-1, 110-2, 110-3, 110-4 and the polarization orthogonality.

Figure 6 illustrates a diagram of a radar system 600 according to a sixth embodiment of the present disclosure. Features which have been described above are not described again in detail here.

The radar system 600 comprises the same elements as those of Figure 3 and Figure 5. The difference between radar system 500 relates to the coupling structures 110 and how the power from the radar heads (Tx1, Rx1, Tx2, Rx2) is fed into the waveguide launchers 115. The waveguide launchers 115-1, 115-2 comprise dual ports, creating dual polarized orthogonal waves. Accordingly, a waveguide 125 having a square cross-section is used in this embodiment. Otherwise, the radar system 600 is comparatively similar to that of radar system 500 described above.

If very high isolation is not needed, then the couplers as illustrated in Figure 5 can be replaced with power dividers 111-1, 111-2. Each channel can still make use of one polarization line as described in relation to Figure 5 above.

Power dividers 111-1, 111-2 are passive devices used mostly in the field of radio technology. They couple a defined amount of the electromagnetic power in a transmission line to a port enabling the signal to be used in another circuit. Power dividers 111-1, 111-2 directly divide power straight from the radar Tx or Rx head.

In an alternative embodiment to any of the above-described Figures 1 to 6, direct synchronization of local oscillators LO of the radar units in the transmitter and receiver heads 105 can be performed without coupling from antenna feeding line via the coupling structures 110-1, 110-2. This is possible by using a similar fully integrated waveguide network (as that show in Figure 8, for example) that directly transfers the signal from a LO_out of one RF chip/ RF unit 810-1 of the system to the LO_in of the other radar chip/ radar unit 810-2. However, for such arrangement, the launcher and waveguide need to be designed to operate at lower frequency.

Figure 7 illustrates a zoomed in view of a coupler 700 used in some of the embodiments described above. Directional couplers 110 are passive devices used mostly in the field of radio technology.

The coupling of the energy can be achieved by adding a coupling structure 110 to the feeding network of the transmitter or receiver (e.g. a directional coupler or power divider). Such a coupling structure will then feed a waveguide launcher 115 that excites the waveguide 125. The signal needed for synchronization propagates through that waveguide 125 to the other radar unit where it excites the other, receiving waveguide launcher 115. Such receiving waveguide launcher transforms the impinging electromagnetic waves into a signal that is coupled then to the receiving channel of the other radar unit by a coupling structure 110.

Figure 7 illustrates an example of a coupling structure 110 comprising a coupler to couple the energy from the transmitter or receiver antenna feedline to the waveguide launcher 115. A distance x between the feedline and the length of the coupler is optimized to leak a small portion of the transmitter/receiver energy to the waveguide launcher 115 in order not to significantly affect the radar performance. In some examples, the distance x may be less than 1 mm, though other distances can be used to tune the system appropriately. Power re-directed by the coupler is transmitted to the waveguide launchers 115.

Figure 8 illustrates a schematic diagram of a vehicle bumper 805 comprising radar units 810-1, 810-2, 810-3, 810-4 which are distributed about the bumper 805 and connected to one another via a dielectric waveguide 125.

The radar units 810-1, 810-2, 810-3, 810-4 each comprise a transceiver head and a receiver head.

The number of radar units 810 can be scaled up, to include more radar units 810. All are connectable via a singular dielectric waveguide 125, which can be manufactured according to requirements.

Synchronization of multiple radar units coupled by the waveguide 125 can be achieved because waveguide dividers can be fabricated as one item with the waveguides, for example as illustrated in Figure 8. Prior art technologies require addition of components to introduce more radar units to the system, requiring more expensive, less efficient and heavier systems. The present disclosure therefore provides advantages over prior art systems because it is easily scalable.

Figures 9A and 9B illustrate a dielectric waveguide 125 having a square cross-section as fabricated on top of (Figure 9A) and integral to (Figure 9B) a vehicle bumper 805.

The square dielectric waveguide 125 may be fabricated as a Molded Interconnect Device (MID) directly onto a surface or milled within a structure such as a bumper 805. It can be metalized or not metalized.

TheMID-waveguide can be either connected to a waveguide opening that is made as part of the radome/housing of standalone radar with fixing screws, or can be fabricated together with the whole Radar using multilayer MID technology. A radome is a structural, weatherproof enclosure that protects a radar antenna. The radome is constructed of material transparent to radio waves. Radomes protect the antenna from weather and conceal antenna electronic equipment from view.

The first method of manufacture as part of a radome provides the possibility to maintain the RF structures that are sensitive to fabrication tolerances (i.e structures other than the waveguide 125) separate to the MID fabrication on the PCB in case manufacture using MID technology degrades the performance of the radar system. The structures that are much less sensitive (e.g. the waveguide 125) to fabrication tolerances can be fabricated using MID in relative isolation from the sensitive RF structurers.

The second fabrication option comprising fabrication at the same time as the RF structures offers a fully integrated radar and synchronization network.

The MID fabricated waveguide is fabricated with a square cross-section and couples energy between radar units. The coupling is used to synchronize the connected radar units as explained above thereby enabling a distributed radar network with higher angular resolution.

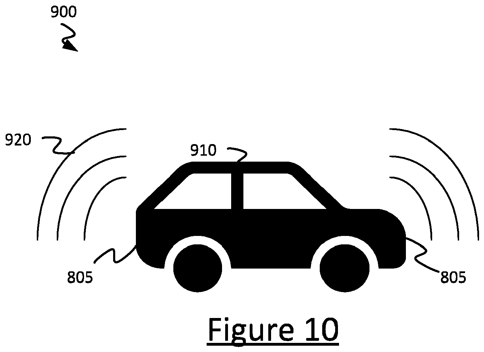

Figure 10 illustrates a vehicle 910 comprising a radar system. The vehicle comprises bumpers 805 having the radar system as illustrated in Figure 8.

Radar signals 910 are emitted from the radar system comprised in the vehicle bumpers 805. These signals can be used in parking systems, for example, to prevent a driver from hitting into objects that the radar signal 910 detects close to the vehicle 910.

Whilst the above examples have been described for the use in automotive applications, the radar structure described herein can be used in any suitable radar system.

It will be readily understood that the components of the embodiments as generally described herein and illustrated in the appended figures could be arranged and designed in a wide variety of different configurations. Thus, the following more detailed description of various embodiments, as represented in the figures, is not intended to limit the scope of the present disclosure, but is merely representative of various embodiments. While the various aspects of the embodiments are presented in drawings, the drawings are not necessarily drawn to scale.

The present invention may be embodied in other specific forms without departing from its spirit or essential characteristics. The described embodiments are to be considered in all respects only as illustrative and not restrictive. The scope of the invention is, therefore, indicated by the appended claims rather than by this detailed description. All changes which come within the meaning and range of equivalency of the claims are to be embraced within their scope.

Reference throughout this specification to features, advantages, or similar language does not imply that all of the features and advantages that may be realized with the present invention should be or are in any single embodiment of the invention. Rather, language referring to the features and advantages is understood to mean that a specific feature, advantage, or characteristic described in connection with an embodiment is included in at least one embodiment of the present invention. Thus, discussions of the features and advantages, and similar language, throughout this specification may, but do not necessarily, refer to the same embodiment.

Furthermore, the described features, advantages, and characteristics of the invention may be combined in any suitable manner in one or more embodiments. One skilled in the relevant art will recognize, in light of the description herein, that the invention can be practiced without one or more of the specific features or advantages of a particular embodiment. In other instances, additional features and advantages may be recognized in certain embodiments that may not be present in all embodiments of the invention.

## Claims

1. A radar system for a vehicle, the radar system comprising:
a first radar unit comprising:
a first transmitter head and a first receiver head;
a first coupling structure coupled to the first transmitter head or the first receiver head; and
a first waveguide launcher coupled to the first coupling structure;
a second radar unit comprising:
a second transmitter head and a second receiver head;
a second coupling structure coupled to the second receiver head; and
a second waveguide launcher coupled to the second coupling structure; and
a waveguide coupled between the first and second waveguide launchers;
wherein the first and second coupling structures are configured to redirect a portion of a signal from the respective transmitter head or receiver head that the coupling structure is coupled to in order to excite the first and second waveguide launchers respectively in order to transmit an excited signal to the other of the radar units via the waveguide;
wherein upon receipt of the excited signal received via the waveguide, a beat signal is generated from which a frequency offset and a phase-noise calculation are made; and
wherein the first and second radar units are configured to be synchronized based on the frequency offset and the phase-noise calculation.

2. The radar system of claim 1, wherein the first coupling structure is coupled to the transmitter head of the first radar unit; and
wherein the first and second waveguide launchers comprise a single feed from the respective coupling structures.

3. The radar system of claim 1, wherein the first coupling structure is coupled to the receiver head of the second radar unit; and
wherein the first and second waveguide launchers comprise a single feed from the respective coupling structures.

4. The radar system of claim 1, wherein the first radar unit further comprises a third coupling structure coupled to the other of the first receiver head or the first transmitter head of the first radar unit;
wherein the first waveguide launcher is coupled to the first and third coupling structures;
wherein the second radar unit further comprises a fourth coupling structure coupled to the transmitter head of the second radar unit; and
wherein the second waveguide launcher is coupled to the second and fourth coupling structures.

5. The radar system of claim 4, wherein the first waveguide launcher is coupled to the first and third coupling structures via a first power combiner; and
wherein the second waveguide launcher is coupled to the second and fourth coupling structures via a second power combiner.

6. The radar system of claim 4, further comprising:
a first data transceiver coupled to the first waveguide launcher;
a second data transceiver coupled to the second waveguide launcher; and
wherein the waveguide has a square cross-section.

7. The radar system of claim 4, wherein the first waveguide launcher is coupled to the first and third coupling structures respectively;
wherein the second waveguide launcher is coupled to the second and fourth coupling structures respectively; and
wherein the waveguide has a square cross-section.

8. The radar system according to any of claims 1 to 7, wherein the first and second coupling structures each comprise a directional coupler.

9. The radar system of claim 7, wherein the first and second coupling structures each comprise a power divider.

10. The radar system of any preceding claim, wherein the first and second waveguide launchers comprise two orthogonal ports.

11. The radar system of any of claims 1 to 5, wherein the first and second waveguide launchers comprises a single port; and
wherein the waveguide has a circular cross-section.

12. The radar system of any preceding claim, wherein the waveguide is configured to connect to one or more further radar units.

13. The radar system of any preceding claim, wherein the redirected portion of power of the respective radar head comprises less than 10% of the total power of the radar head.

14. A bumper comprising the radar system of any preceding claim.

15. A vehicle comprising the radar system of any preceding claim or the bumper of claim 14.
